# EUROPEAN PATENT APPLICATION

(11) **EP 4 383 651 A1**
(43) Date of publication of application: **12.06.2024**
(21) Application number: 22863074.5
(22) Date of filing: 11.08.2022
(51) Int. Cl.: H04L 12/00, H04L 41/00

(54) **MICRO-SERVICE LOGIC NETWORK AND CONSTRUCTION METHOD AND APPARATUS THEREOF, DEVICE AND READABLE MEDIUM**

(30) Priority: 01.09.2021 CN 202111020127
(71) Applicant: ZTE Corporation, Shenzhen, Guangdong 518057 (CN)
(72) Inventor: NI, Jinquan, Shenzhen, Guangdong 518057 (CN); LI, Xing, Shenzhen, Guangdong 518057 (CN); PU, Jiange, Shenzhen, Guangdong 518057 (CN); XU, Daigang, Shenzhen, Guangdong 518057 (CN); LI, Xiaojin, Shenzhen, Guangdong 518057 (CN)
(74) Representative: Canzler & Bergmeier Patentanwälte Partnerschaft mbB
(86) International application number: PCT/CN2022/111712
(87) International publication number: WO 2023/029934

(57) **Abstract**

The present application provides a micro-service logic network and a construction method and apparatus thereof, a device and a readable medium. The micro-service logic network construction method comprises: establishing a micro-service logic network of a micro-service architecture on the basis of a calling relationship between different nodes in the micro-service architecture and a subordinate relationship between the nodes, the micro-service logic network comprising a calling logic network of the nodes at the same level and a calling logic network of the nodes at different levels.

## Description

### CROSS REFERENCE TO RELATED APPLICATIONS

The present disclosure claims the priority to Chinese Patent Application No. 202111020127.6 filed on September 1, 2021 with the CNIPA, the contents of which are incorporated herein by reference in their entirety.

### TECHNICAL FIELD

The present disclosure relates to, but is not limited to, computer technologies.

### BACKGROUND

Micro-service architectures are important technology of cloud native and are adopted more and more in the industry, which directly leads to the explosive growth of scales of the micro-service architectures and brings a challenge to management, such as to the maintenance efficiency of micro-services. Therefore, the management of logic networks of the micro-services architectures needs to be improved.

### SUMMARY

In a first aspect, the present disclosure provides a construction method of a micro-service logic network, including establishing, based on calling relationships between different nodes in a micro-service architecture and subordination relationships between the nodes, a micro-service logic network of the micro-service architecture, with the micro-service logic network including calling logic networks of the nodes in a same level and calling logic networks of the nodes in different levels.

In a second aspect, the present disclosure provides a construction apparatus of a micro-service logic network, including: a network establishment module configured to establish, based on calling relationships between different nodes in a micro-service architecture and subordination relationships between the nodes, a micro-service logic network of the micro-service architecture, with the micro-service logic network including calling logic networks of the nodes in a same level and calling logic networks of the nodes in different levels.

In a third aspect, the present disclosure provides a micro-service logic network, including a plurality of nodes, and the nodes include nodes in a same level and nodes in different levels in a micro-service architecture; and the nodes are connected through the micro-service logic network, and the micro-service logic network is established according to calling relationships between different nodes in the micro-service architecture and subordination relationships between the nodes, and includes calling logic networks of the nodes in the same level and calling logic networks of the nodes in the different levels.

In a fourth aspect, the present disclosure provides an electronic device, including: one or more processors; a memory having stored thereon one or more programs which, when executed by the one or more processors, cause the one or more processors to implement the construction method of a micro-service logic network described herein; and one or more input/output (I/O) interfaces connected between the one or more processors and the memory and configured to enable information interaction between the one or more processors and the memory.

In a fifth aspect, the present disclosure provides a storage medium having stored thereon a computer program which, when executed by a processor, implements the construction method of a micro-service logic network described herein.

### BRIEF DESCRIPTION OF DRAWINGS

FIG. 1 is a schematic structural diagram of a micro-service architecture;
FIG. 2 is a flowchart illustrating a construction method of a micro-service logic network according to the present disclosure;
FIG. 3 is a flowchart illustrating a construction method of a micro-service logic network according to the present disclosure;
FIG. 4 is a schematic diagram of a micro-service logic network according to the present disclosure;
FIG. 5 is a schematic structural diagram of a construction apparatus of a micro-service logic network according to the present disclosure;
FIG. 6 is a schematic structural diagram of a network establishment module according to the present disclosure; and
FIG. 7 is a schematic structural diagram of an electronic device according to the present disclosure.

### DETAIL DESCRIPTION OF EMBODIMENTS

In order to enable those of ordinary skill in the art to better understand the technical solutions of the present disclosure, a server provided by the present disclosure is described in detail below with reference to the drawings.

Exemplary implementations will be described more fully below with reference to the drawings, but the exemplary implementations described herein may be embodied in different forms, and the present disclosure should not be interpreted as being limited to the implementations described herein. Rather, the implementations are provided to make the present disclosure more thorough and complete, and are intended to enable those of ordinary skill in the art to fully understand the scope of the present disclosure.

The term "and/or" used herein includes any or all combinations of one or more associated listed items.

The terms used herein are merely used to describe specific implementations, and are not intended to limit the present disclosure. As used herein, "a" and "the" which indicate a singular form are intended to include a plural form, unless expressly stated in the context. It should be further understood that the terms "comprise/include" and/or "be made/formed of" used herein indicate the presence of a feature, an integer, an operation, an element and/or a component, but do not exclude the presence or addition of one or more other features, integers, operations, elements, components and/or combinations thereof.

The implementations of the present disclosure may be described with reference to plans and/or cross-sectional views with the aid of idealized schematic diagrams of the present disclosure. Accordingly, the exemplary drawings may be modified according to manufacturing techniques and/or tolerances. Therefore, the implementations are not limited to that illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the existing technology and the background of the present disclosure, and should not be interpreted in an idealized or overly formal sense unless expressly so defined herein.

Micro-services have the characteristics of low coupling and high cohesion, and can realize independent development and deployment of each function and improve flexibility of an application framework. Therefore, the micro-services are a widely applied technique in the field of cloud native. In general, a micro-service architecture includes a plurality of nodes connected through a service network. The nodes may be services or service instances. At least one service instance may be deployed for each service, that is, the nodes in the micro-service architecture are divided into two levels: a main level is a level of the services, and a slave level is a level of the service instances. Each service may implement a function, and each service instance may be a version of the service.

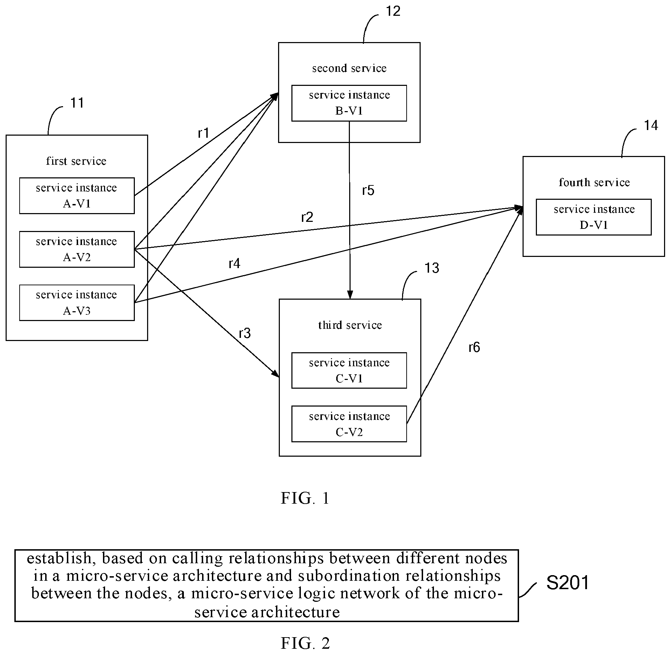

FIG. 1 is a schematic structural diagram of a micro-service architecture. As shown in FIG. 1, the micro-service architecture includes a first service 11, a second service 12, a third service 13, and a fourth service 14; three service instances, namely a service instance A-V1, a service instance A-V2, and a service instance A-V3, are deployed for the first service 11; one service instance, namely a service instance B-V1, is deployed for the second service 12; two service instances, namely a service instance C-V1 and a service instance C-V2, are deployed for the third service; and one service instance, namely a service instance D-V1, is deployed for the fourth service 14.

There are calling relationships between the services and the service instances. For example, the service instance A-V1 of the first service 11 calls the second service 12, the service instance A-V2 of the first service 11 calls the second service 12, the third service 13, and the fourth service 14, and the service instance A-V3 of the first service 11 calls the second service 12 and the fourth service 14; and the service instance B-V1 of the second service 12 calls the third service 13, and the service instance C-V2 of the third service 13 calls the fourth service 14.

When the service instance B-V1 of the second service 12 is upgraded, not only does an access control policy of the third service 13 need to be updated, but also access control policies of the service instance A-V1, the service instance A-V2, and the service instance A-V3, which have the calling relationships with the service instance B-V1, need to be updated respectively. Apparently, there are redundant access control policies, resulting in low updating efficiency.

In a first aspect, the present disclosure provides a construction method of a micro-service logic network, and a micro-service logic network constructed with the construction method of a micro-service logic network can reduce redundant access control policies and optimize run-time implementation efficiency of access control policies.

FIG. 2 is a flowchart illustrating a construction method of a micro-service logic network according to the present disclosure. As shown in FIG. 2, the construction method of a micro-service logic network may include: operation S201, establishing, based on calling relationships between different nodes in a micro-service architecture and subordination relationships between the nodes, a micro-service logic network of the micro-service architecture, with the micro-service logic network including calling logic networks of the nodes in a same level and calling logic networks of the nodes in different levels.

A calling relationship refers to a logical relationship of a node calling another node through a service network. The subordination relationships refer to subordination relationships between the nodes in different levels in the micro-service architecture, that is, the subordination relationships between master nodes and slave nodes. For example, the master nodes are services, and the slave nodes are service instances. The micro-service logic network is a network which describes the calling relationships between the nodes in the micro-service architecture, and the calling logic between the nodes can be clearly understood through the micro-service logic network.

In some implementations, the micro-service architecture includes the nodes in a plurality of levels, and the calling relationships may exist between the nodes in a same level and may also exist between the nodes in different levels. For example, the micro-service architecture includes nodes in two levels, i.e., a service level and a service instance level, services are master nodes, and service instances are slave nodes.

As shown in FIG. 1, the calling relationships between the master nodes may include: a calling relationship between the first service 11 and the second service 12, a calling relationship between the first service 11 and the third service 13, and a calling relationship between the second service 12 and the third service 13.

The calling relationships between the master nodes and the slave nodes may include: a calling relationship between the service instance A-V1 of the first service 11 and the second service 12, a calling relationship between the service instance A-V2 of the first service 11 and each of the second service 12, the third service 13, and the fourth service 14, a calling relationship between the service instance A-V3 of the first service 11 and each of the second service 12 and the fourth service 14, a calling relationship between the service instance B-V1 of the second service 12 and the third service 13, and a calling relationship between the service instance C-V2 of the third service 13 and the fourth service 14.

The subordination relationships between the master nodes and the slave nodes may include: a subordination relationship between each of the service instance A-V1, the service instance A-V2 and the service instance A-V3 and the first service 11, a subordination relationship between the service instance B-V1 and the second service 12, a subordination relationship between each of the service instance C-V1 and the service instance C-V2 and the third service 13, and a subordination relationship between the service instance D-V1 and the fourth service 14.

With the construction method of a micro-service logic network provided by the present disclosure, the logic network of the micro-service architecture is established based on the calling relationships between the different nodes in the micro-service architecture and the subordination relationships between the nodes, so that the calling logic networks include not only the calling logic networks of the nodes in the same level but also the calling logic networks of the nodes in the different levels, that is, there are the calling logic networks with different granularities in the micro-service logic network, and therefore, when the micro-service architecture is maintained, the calling logic networks with the different granularities may be maintained as required and the calling relationships between the nodes shared by each version in the micro-services do not need to be maintained respectively; moreover, redundant access control policies can be reduced, run-time implementation efficiency of access control policies can be optimized, unnecessary installation of access control policies can be reduced, and on-demand updating and distribution of access control policies can be realized.

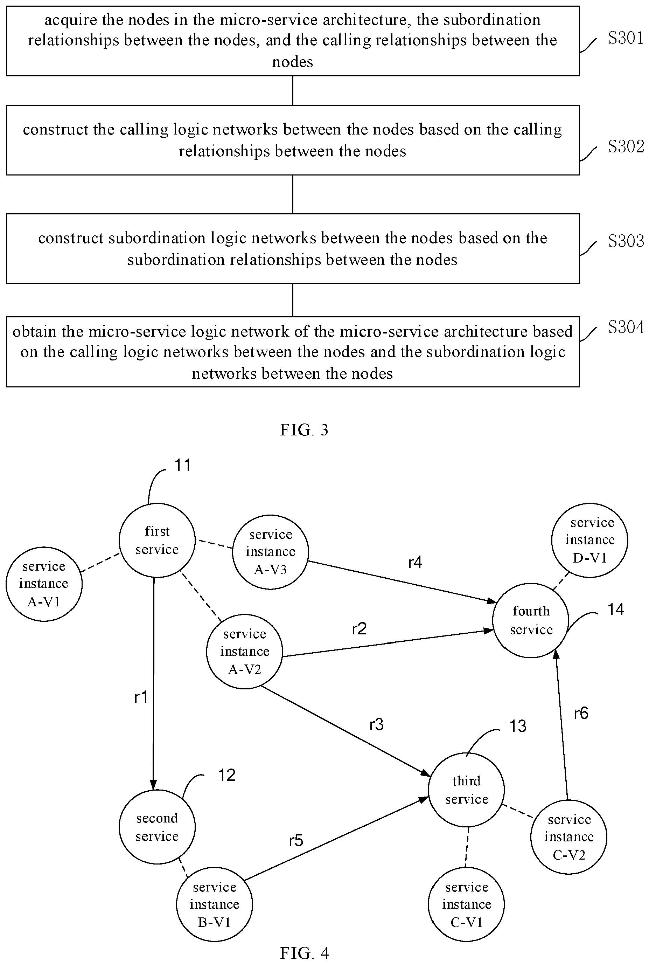

FIG. 3 is a flowchart illustrating a construction method of a micro-service logic network according to the present disclosure. As shown in FIG. 1 and FIG. 3, the construction method of a micro-service logic network may include operations S301 to S304.

In operation S301, the nodes in the micro-service architecture, the subordination relationships between the nodes, and the calling relationships between the nodes are acquired.

In operation S302, the calling logic networks between the nodes are constructed based on the calling relationships between the nodes.

The calling logic networks are logic networks between the nodes having the calling relationships. For example, a logic network between the first service 11 and the second service 12 is a calling logic network.

In operation S303, subordination logic networks between the nodes are constructed based on the subordination relationships between the nodes.

The subordination logic networks are logic networks between the nodes having the subordination relationships. For example, a logic network between the second service 12 and the service instance B - V1 is a subordination logic network.

It should be noted that the operation S302 and the operation S303 are performed in no particular order.

In operation S304, the micro-service logic network of the micro-service architecture is obtained based on the calling logic networks between the nodes and the subordination logic networks between the nodes.

In the operation S304, based on the calling logic networks and the subordination logic networks, in a case where each slave node subordinate to a same master node and another node in the micro-service architecture have a calling logic network, all the slave nodes subordinate to the same master node are combined into the master node to obtain the micro-service logic network of the micro-service architecture.

FIG. 4 is a schematic diagram of a micro-service logic network according to the present disclosure. In FIG. 4, the dotted lines between the nodes indicate the subordination relationships, and the solid lines between the nodes indicate the calling relationships. As shown in FIG. 1 and FIG. 4, each of the service instance A-V1, the service instance A-V2, and the service instance A-V3 of the first service 11 has a calling relationship with the second service 12, so that the calling relationships between the service instance A-V1 and the second service 12, between the service instance A-V2 and the second service 12, and between the service instance A-V3 and the second service 12 are combined into the calling relationship r1 between the first service 11 and the second service 12, and the calling relationships are raised to a main level (a service level). When a version of the first service 11 needs to be updated, instead of respectively updating the service instance A-V1, the service instance A-V2, and the service instance A-V3 as in the existing technology, the first service 11 is directly updated, so that updating efficiency is improved.

In the present implementation, the service instances which meet the condition are combined and the level of the calling relationships is changed accordingly, but the level of the calling relationships of the service instances which do not meet the condition cannot be changed. Since the service instance A-V2 can call the service instance C-V1 and the service instance C-V2 of the third service 13, the calling relationship r3 between the service instance A-V2 and the third service 13 belongs to a service level. Since the service instance A-V2 can call the service instance D-V1 of the fourth service 14 and the fourth service 14 has merely one service instance, the calling relationship r2 between the service instance A-V2 and the fourth service 14 belongs to the service level. Since the service instance A-V3 can call the fourth service 14, the calling relationship r4 between the service instance A-V3 and the fourth service 14 belongs to the service level.

The calling relationship r5 between the service instance B-V1 of the second service 12 and the third service 13 remains at the service level, and the calling relationship r6 between the service instance C-V2 of the third service 13 and the fourth service 14 remains at the service level.

In the micro-service logic network of the micro-service architecture provided by the present implementation, the logic networks of the service level and of a service instance level exist between the nodes in the micro-service architecture, so that the implementation efficiency of the access control policies is optimized.

In some implementations, the operation S302 of constructing the calling logic networks between the nodes based on the calling relationships between the nodes may include, but is not limited to, determining the nodes corresponding to the calling relationships based on the calling relationships; and establishing request mappings between the nodes corresponding to the calling relationships to obtain the calling logic networks.

In the present implementation, each calling relationship between the nodes involves two nodes, the two nodes corresponding to the calling relationship may be determined based on the calling relationship, and a request mapping is established between the nodes corresponding to the calling relationship to obtain a calling logic network.

As shown in FIG. 1, based on the calling relationship r1 between the service instance A-V1 and the second service 12, a request mapping is established between the service instance A-V1 and the second service 12 to obtain a calling logic network. Based on the calling relationship between the service instance A-V2 and each of the second service 12, the third service 13, and the fourth service 14, a request mapping is established between the service instance A-V2 and each of the second service 12, the third service 13, and the fourth service 14 to obtain a calling logic network. Based on the calling relationship between the service instance A-V3 and each of the second service 12 and the fourth service 14, a request mapping is established between the service instance A-V3 and each of the second service 12 and the fourth service 14 to obtain a calling logic network. Based on the calling relationship between the service instance B-V1 and the third service 13, a request mapping is established between the service instance B-V1 and the third service 13 to obtain a calling logic network. Based on the calling relationship between the service instance C-V2 and the fourth service 14, a request mapping is established between the service instance C-V2 and the fourth service 14 to obtain a calling logic network.

In some implementations, the operation S303 of constructing the subordination logic networks between the nodes based on the subordination relationships between the nodes may include, but is not limited to, determining the nodes corresponding to the subordination relationships based on the subordination relationships; and establishing subordination mappings between the nodes corresponding to the subordination relationships to obtain the subordination logic networks.

In the present implementation, each subordination relationship between the nodes involves two nodes, the two nodes corresponding to the subordination relationship may be determined based on the subordination relationship, and a subordination mapping is established between the nodes corresponding to the subordination relationship to obtain a subordination logic network.

As shown in FIG. 1, based on the subordination relationship between the first service 11 and the service instance A-V1, a subordination mapping is established between the first service 11 and the service instance A-V1 to obtain a subordination logic network. A subordination mapping is established between each of the service instance A-V2 and the service instance A-V13 and the first service 11 to obtain a subordination logic network. Based on the subordination relationship between the second service 12 and the service instance B-V1, a subordination mapping is established between the second service 12 and the service instance B-V1 to obtain a subordination logic network. Based on the subordination relationship between each of the service instance C-V1 and the service instance C-V2 and the third service 13, a subordination mapping is established between the third service 13 and each of the service instance C-V1 and the service instance C-V2 to obtain a subordination logic network. Based on the subordination relationship between the fourth service 14 and the service instance D-V1, a subordination mapping is established between the fourth service 14 and the service instance D-V1 to obtain a subordination logic network.

In some implementations, the operation S304 of obtaining the logic network of the micro-service architecture based on the calling logic networks between the nodes and the subordination logic networks between the nodes may include, but is not limited to, combining, based on the calling logic networks and the subordination logic networks between the nodes, slave nodes having a same calling logic network under a same master node into a master node which is the master node common to the slave nodes, so as to obtain the logic network of the micro-service architecture.

As shown in FIG. 1 and FIG. 4, each of the service instance A-V1, the service instance A-V2, and the service instance A-V3 of the first service 11 has the calling relationship with the second service 12, so that the calling relationships between the service instance A-V1 and the second service 12, between the service instance A-V2 and the second service 12, and between the service instance A-V3 and the second service 12 are combined into the calling relationship r1 between the first service 11 and the second service 12, and the calling relationships are raised to the main level (the service level).

In some implementations, the services are nodes having a common permission in the micro-service architecture. For example, the service instance A-V1, the service instance A-V2, and the service instance A-V3 are three different versions of a service, that is, the three service instances are merely different in version, but have a common permission.

The service instances are nodes each having an exclusive permission in the micro-service architecture. For example, although the service instance A-V1, the service instance A-V2, and the service instance A-V3 have the similar common permission, each of the service instance A-V1, the service instance A-V2, and the service instance A-V3 further has a different exclusive permission due to the difference in version. Since the service instance B-V1, the service instance C-V1, and the service instance D- V1 perform different functions, each of the service instance B-V1, the service instance C-V1, and the service instance D-V1 has a different exclusive permission. Although the service instance C-V1 and the service instance C-V2 have a similar common permission, each of the service instance C-V1 and the service instance C-V2 further has a different exclusive permission due to a difference in version.

In some implementations, both the common permission and the exclusive permission refer to version permissions of a micro-service.

In some implementations, after the operation S304 of obtaining the logic network of the micro-service architecture based on the calling relationships between the different nodes in the micro-service architecture and the subordination relationships between the nodes, the construction method may further include, but is not limited to, generating a permission graph of the micro-service architecture based on the micro-service logic network of the micro-service architecture.

The permission graph is a graph (a view) for visualization of the micro-service logic network, and a user can directly understand the logic network of the micro-service architecture through the permission graph.

With the construction method of a micro-service logic network provided by the present disclosure, the logic network of the micro-service architecture is established based on the calling relationships between the different nodes in the micro-service architecture and the subordination relationships between the nodes, so that the calling logic networks include not only the calling logic networks of the nodes in the same level but also the calling logic networks of the nodes in the different levels, that is, there are the calling logic networks with different granularities in the micro-service logic network, and therefore, when the micro-service architecture is maintained, the calling logic networks with the different granularities may be maintained as required and the calling relationships between the nodes shared by each version in the micro-services do not need to be maintained respectively; moreover, the redundant access control policies can be reduced, the run-time implementation efficiency of the access control policies can be optimized, the unnecessary installation of the access control policies can be reduced, and the on-demand updating and distribution of the access control policies can be realized.

In a second aspect, the present disclosure provides a construction apparatus of a micro-service logic network, and a micro-service logic network constructed with the construction apparatus of a micro-service logic network can reduce redundant access control policies and optimize run-time implementation efficiency of access control policies.

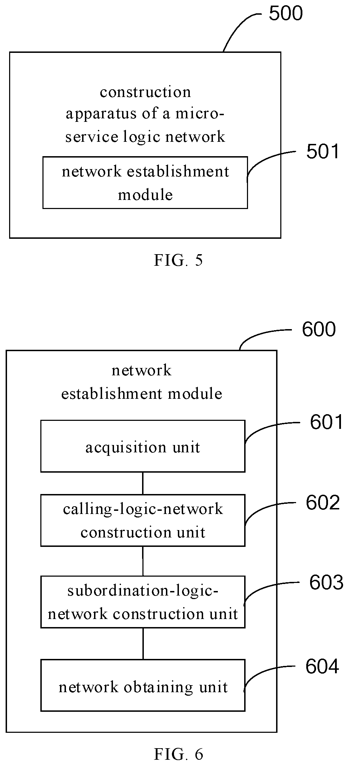

FIG. 5 is a schematic structural diagram of a construction apparatus of a micro-service logic network according to the present disclosure. As shown in FIG. 5, an implementation of the present disclosure provides a construction apparatus of a micro-service logic network 500, including: a network establishment module 501 configured to establish, based on calling relationships between different nodes in a micro-service architecture and subordination relationships between the nodes, a micro-service logic network of the micro-service architecture, with calling logic networks including calling logic networks of the nodes in a same level and calling logic networks of the nodes in different levels.

A calling relationship refers to a logical relationship of a node calling another node through a service network. The subordination relationships refer to subordination relationships between the nodes in different levels in the micro-service architecture, that is, the subordination relationships between master nodes and slave nodes. For example, the master nodes are services, and the slave nodes are service instances. The micro-service logic network is a network which describes the calling relationships between the nodes in the micro-service architecture, and the calling logic between the nodes can be clearly understood through the micro-service logic network.

FIG. 6 is a schematic structural diagram of a network establishment module according to an implementation of the present disclosure. As shown in FIG. 1 and FIG. 6, in some implementations, the network establishment module 600 includes: an acquisition unit 601, a calling-logic-network construction unit 602, a subordination-logic-network construction unit 603, and a network obtaining unit 604.

The acquisition unit 601 is configured to acquire the nodes in the micro-service architecture, the subordination relationships between the nodes, and the calling relationships between the nodes.

As shown in FIG. 1, the micro-service architecture includes service nodes and service instance nodes, the service nodes include the first service 11, the second service 12, the third service 13, and the fourth service 14, and the service instance nodes include the service instance A-V1, the service instance A-V2, the service instance A-V3, the service instance B-V1, the service instance C-V1, the service instance C-V2, and the service instance D-V1. The subordination relationships between the nodes include: the subordination relationship between each of the service instance A-V1, the service instance A-V2, and the service instance A-V3 and the first service 11, the subordination relationship between the service instance B-V1 and the second service 12, the subordination relationship between each of the service instance C-V1 and the service instance C-V2 and the third service 13, and the subordination relationship between the service instance D-V1 and the fourth service 14. The calling relationships between the nodes include: the calling relationship r1 between the service instance A-V1 and the second service 12, the calling relationship between the service instance A-V2 and each of the second service 12, the third service 13, and the fourth service 14, the calling relationship between the service instance A-V3 and each of the second service 12 and the fourth service 14, the calling relationship between the service instance B-V1 and the third service 13, and the calling relationship between the service instance C-V2 and the fourth service 14.

The calling-logic-network construction unit 602 is configured to construct the calling logic networks between the nodes based on the calling relationships between the nodes.

The calling logic networks are logic networks between the nodes having the calling relationships. For example, a logic network between the first service 11 and the second service 12 is a calling logic network. A logic network between the service instance A-V1 and the second service 12 is a calling logic network, a logic network between the service instance A-V2 and each of the second service 12, the third service 13, and the fourth service 14 is a calling logic network, a logic network between the service instance A-V3 and each of the second service 12 and the fourth service 14 is a calling logic network, a logic network between the service instance B-V1 and the third service 13 is a calling logic network, and a logic network between the service instance C-V2 and the fourth service 14 is a calling logic network.

The subordination-logic-network construction unit 603 is configured to construct subordination logic networks between the nodes based on the subordination relationships between the nodes.

The subordination logic networks are logic networks between the nodes having the subordination relationships. For example, a logic network between each of the service instance A-V1, the service instance A-V2, and the service instance A-V3 and the first service 11 is a subordination logic network, and a logic network between the second service 12 and the service instance B - V1 is a subordination logic network. A logic network between each of the service instance C-V1 and the service instance C-V2 and the third service 13 is a subordination logic network, and a logic network between the service instance D- V1 and the fourth service 14 is a subordination logic network.

The network obtaining unit 604 is configured to obtain the micro-service logic network of the micro-service architecture based on the calling logic networks between the nodes and the subordination logic networks between the nodes.

The nodes in different levels are combined based on the calling logic networks and the subordination logic networks to obtain the micro-service logic network of the micro-service architecture.

In some implementations, the calling-logic-network construction unit 602 includes: a first node determination subunit configured to determine the nodes corresponding to the calling relationships based on the calling relationships; and a first network obtaining subunit configured to establish request mappings between the nodes corresponding to the calling relationships to obtain the calling logic networks between the nodes.

In the present implementation, each calling relationship between the nodes involves two nodes, the two nodes corresponding to the calling relationship may be determined based on the calling relationship, and a request mapping is established between the nodes corresponding to the calling relationship to obtain a calling logic network between the nodes.

In some implementations, the subordination-logic-network construction unit 603 includes: a second node determination subunit configured to determine the nodes corresponding to the subordination relationships based on the subordination relationships; and a second network obtaining subunit configured to establish subordination request mappings between the nodes corresponding to the subordination relationships to obtain the subordination logic networks between the nodes.

In the present implementation, each subordination relationship between the nodes involves two nodes, the two nodes corresponding to the subordination relationship may be determined based on the subordination relationship, and a subordination request mapping is established between the nodes corresponding to the subordination relationship to obtain a subordination logic network between the nodes.

It should be noted that a request edge and a subordination edge are functional edges determined based on the logical relationships between the nodes; and when there is another logical relationship between the nodes, the nodes may be connected using a functional edge corresponding to the logical relationship.

In some implementations, the network obtaining unit 604 is configured to combine, in a case where each slave node subordinate to a same master node and another node in the micro-service architecture have a calling logic network, all the slave nodes subordinate to the same master node into the master node based on the calling logic networks and the subordination logic networks, so as to obtain the logic network of the micro-service architecture.

As shown in FIG. 1 and FIG. 4, each of the service instance A-V1, the service instance A-V2, and the service instance A-V3 of the first service 11 has a calling relationship with the second service 12, so that the calling relationships between the service instance A-V1 and the second service 12, between the service instance A-V2 and the second service 12, and between the service instance A-V3 and the second service 12 are combined into the calling relationship r1 between the first service 11 and the second service 12, and the calling relationships are raised to a main level (a service level).

In some implementations, the services are nodes having a common permission in the micro-service architecture. For example, the service instance A-V1, the service instance A-V2, and the service instance A-V3 are three different versions of a service, that is, the three service instances are merely different in version, but have a common permission.

The service instances are nodes each having an exclusive permission in the micro-service architecture. For example, although the service instance A-V1, the service instance A-V2, and the service instance A-V3 have the similar permission, each of the service instance A-V1, the service instance A-V2, and the service instance A-V3 further has a different exclusive permission due to the difference in version. Since the service instance B-V1, the service instance C-V1, and the service instance D-V1 perform different functions, each of the service instance B-V1, the service instance C-V1, and the service instance D-V1 has a different exclusive permission. Although the service instance C-V1 and the service instance C-V2 have a similar permission, each of the service instance C-V1 and the service instance C-V2 further has a different exclusive permission due to a difference in version.

In some implementations, the construction apparatus of a micro-service logic network 500 further includes: a graph generation unit configured to generate a permission graph of the micro-service architecture based on the micro-service logic network of the micro-service architecture.

The permission graph is a graph for visualization of the micro-service logic network, and a user can directly understand the logic network of the micro-service architecture through the permission graph.

It should be noted that the construction method of a micro-service logic network provided in the above implementations is applicable to the construction apparatus of a micro-service logic network provided in the present implementation.

With the construction apparatus of a micro-service logic network provided by the present disclosure, the logic network of the micro-service architecture is established based on the calling relationships between the different nodes in the micro-service architecture and the subordination relationships between the nodes, so that the calling logic networks include not only the calling logic networks of the nodes in the same level but also the calling logic networks of the nodes in the different levels, that is, there are the calling logic networks with different granularities in the micro-service logic network, and therefore, when the micro-service architecture is maintained, the calling logic networks with the different granularities may be maintained as required and the calling relationships between the nodes shared by each version in the micro-services do not need to be maintained respectively; moreover, redundant access control policies can be reduced, run-time implementation efficiency of access control policies can be optimized, unnecessary installation of access control policies can be reduced, and on-demand updating and distribution of access control policies can be realized.

In a third aspect, the present disclosure provides a micro-service logic network, including a plurality of nodes, and the nodes include nodes in a same level and nodes in different levels in a micro-service architecture; and the nodes are connected through the micro-service logic network, and the micro-service logic network is established according to calling relationships between different nodes in the micro-service architecture and subordination relationships between the nodes, and includes calling logic networks of the nodes in the same level and calling logic networks of the nodes in the different levels.

It should be noted that the micro-service logic network provided herein is a network constructed with the construction method of a micro-service logic network described in the above implementations, so the specific construction method will not be described in detail here.

In the micro-service logic network, the nodes having request mapping relationships are connected through a request edge, and the nodes having subordination mapping relationships are connected through a subordination edge, thereby obtaining a permission graph.

Compared with a service logic network totally formed by service granularities, the micro-service logic network provided herein have finer control policies, and can meet requirements of actual cloud native application scenarios. Compared with a service logic network totally formed by service instance granularities, the micro-service logic network provided herein has the advantages that the complexity is reduced and no more resources are occupied by access control policies.

The micro-service logic network provided by the present disclosure includes not only the calling logic networks of the nodes in the same level but also the calling logic networks of the nodes in the different levels, that is, there are the calling logic networks with different granularities in the micro-service logic network, and therefore, when the micro-service architecture is maintained, the calling logic networks with the different granularities may be maintained as required and the calling relationships between the nodes shared by each version in the micro-services do not need to be maintained respectively; moreover, redundant access control policies can be reduced, run-time implementation efficiency of access control policies can be optimized, unnecessary installation of access control policies can be reduced, and on-demand updating and distribution of access control policies can be realized.

In a fourth aspect, the present disclosure provides a micro-service access control policy, with an access control policy configured based on the micro-service logic network provided in the above implementations.

By configuring the access control policy based on the micro-service logic network provided in the above implementations, the calling logic networks with different granularities can be maintained as required and the calling relationships between the nodes shared by each version in the micro-services do not need to be maintained respectively; moreover, redundant access control policies can be reduced, run-time implementation efficiency of access control policies can be optimized, unnecessary installation of access control policies can be reduced, and on-demand updating and distribution of access control policies can be realized.

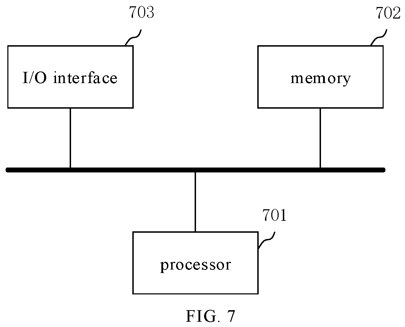

In a fifth aspect, referring to FIG. 7, the present disclosure provides an electronic device, including: one or more processors 701; a memory 702 having stored thereon one or more programs which, when executed by the one or more processors, cause the one or more processors to perform the construction method of a micro-service logic network described above; and one or more input/output (I/O) interfaces 703 connected between the processor and the memory and configured to enable information interaction between the processor and the memory.

The processor 701 is a device having data processing capability, and includes, but is not limited to, a Central Processing Unit (CPU); the memory 702 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 703 is connected between the processor 701 and the memory 702, may enable the information interaction between the processor 701 and the memory 702, and includes, but is not limited to, a data bus (Bus).

In some implementations, the processor 701, the memory 702, and the I/O interface 703 are connected to each other through a bus, and then are connected to other components of a computing device.

In a sixth aspect, the present disclosure provides a computer readable medium having stored thereon a computer program which, when executed by a processor, performs the construction method of a micro-service logic network described above.

According to the construction method of a micro-service logic network, the construction apparatus of a micro-service logic network, the micro-service logic network, the electronic device, and the computer readable medium, the logic network of the micro-service architecture is established based on the calling relationships between the different nodes in the micro-service architecture and the subordination relationships between the nodes, so that the calling logic networks include not only the calling logic networks of the nodes in the same level but also the calling logic networks of the nodes in the different levels, that is, there are the calling logic networks with different granularities in the micro-service logic network, and therefore, when the micro-service architecture is maintained, the calling logic networks with the different granularities may be maintained as required and the calling relationships between the nodes shared by each version in the micro-services do not need to be maintained respectively; moreover, the redundant access control policies can be reduced, the run-time implementation efficiency of the access control policies can be optimized, the unnecessary installation of the access control policies can be reduced, and the on-demand updating and distribution of the access control policies can be realized.

It should be understood by those of ordinary skill in the art that the functional modules/units in all or some of the operations, the systems, and the devices in the methods disclosed above may be implemented as software, firmware, hardware, or suitable combinations thereof. If implemented as hardware, the dividing between the functional modules/units stated above is not necessarily corresponding to the dividing of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable medium used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details may be made without departing from the scope of the present disclosure as claimed by the appended claims.

## Claims

1. A construction method of a micro-service logic network, comprising:
establishing, based on calling relationships between different nodes in a micro-service architecture and subordination relationships between the nodes, a micro-service logic network of the micro-service architecture, with the micro-service logic network comprising calling logic networks of the nodes in a same level and calling logic networks of the nodes in different levels.

2. The method of claim 1, wherein establishing, based on the calling relationships between the different nodes in the micro-service architecture and the subordination relationships between the nodes, the micro-service logic network of the micro-service architecture comprises:
acquiring the nodes in the micro-service architecture, the subordination relationships between the nodes, and the calling relationships between the nodes;
constructing the calling logic networks between the nodes based on the calling relationships between the nodes;
constructing subordination logic networks between the nodes based on the subordination relationships between the nodes; and
obtaining the micro-service logic network of the micro-service architecture based on the calling logic networks between the nodes and the subordination logic networks between the nodes.

3. The method of claim 2, wherein constructing the calling logic networks between the nodes based on the calling relationships between the nodes comprises:
determining the nodes corresponding to the calling relationships based on the calling relationships; and
establishing request mappings between the nodes corresponding to the calling relationships to obtain the calling logic networks between the nodes.

4. The method of claim 2, wherein constructing the subordination logic networks between the nodes based on the subordination relationships between the nodes comprises:
determining the nodes corresponding to the subordination relationships based on the subordination relationships; and
establishing subordination mappings between the nodes corresponding to the subordination relationships to obtain the subordination logic networks between the nodes.

5. The method of claim 2, wherein obtaining the micro-service logic network of the micro-service architecture based on the calling logic networks between the nodes and the subordination logic networks between the nodes comprises:
based on the calling logic networks between the nodes and the subordination logic networks between the nodes, in a case where each slave node subordinate to a same master node and another node in the micro-service architecture have a calling logic network, combining all slave nodes subordinate to the same master node into the corresponding master node, so as to obtain the micro-service logic network.

6. The method of any one of claims 2 to 5, wherein the nodes comprise services and service instances, and a level of the service instances is lower than a level of the services.

7. The method of claim 6, wherein the services are nodes having a common permission in the micro-service architecture, and the service instances are nodes each having an exclusive permission in the micro-service architecture.

8. The method of any one of claims 1 to 5, wherein after establishing the logic network of the micro-service architecture based on the calling relationships between the different nodes in the micro-service architecture and the subordination relationships between the nodes, the method further comprises:
generating a permission graph of the micro-service architecture based on the micro-service logic network of the micro-service architecture.

9. A construction apparatus of a micro-service logic network, comprising:
a network establishment module configured to establish, based on calling relationships between different nodes in a micro-service architecture and subordination relationships between the nodes, a micro-service logic network of the micro-service architecture, with the micro-service logic network comprising calling logic networks of the nodes in a same level and calling logic networks of the nodes in different levels.

10. The apparatus of claim 9, wherein the network establishment module comprises:
an acquisition unit configured to acquire the nodes in the micro-service architecture, the subordination relationships between the nodes, and the calling relationships between the nodes;
a calling-logic-network construction unit configured to construct the calling logic networks between the nodes based on the calling relationships between the nodes;
a subordination-logic-network construction unit configured to construct subordination logic networks between the nodes based on the subordination relationships between the nodes; and
a network obtaining unit configured to obtain the micro-service logic network of the micro-service architecture based on the calling logic networks between the nodes and the subordination logic networks between the nodes.

11. The apparatus of claim 10, wherein the calling-logic-network construction unit comprises:
a first node determination subunit configured to determine the nodes corresponding to the calling relationships based on the calling relationships; and
a first network obtaining subunit configured to establish request mappings between the nodes corresponding to the calling relationships to obtain the calling logic networks between the nodes.

12. The apparatus of claim 10, wherein the subordination-logic-network construction unit comprises:
a second node determination subunit configured to determine the nodes corresponding to the subordination relationships based on the subordination relationships; and
a second network obtaining subunit configured to establish subordination mappings between the nodes corresponding to the subordination relationships to obtain the subordination logic networks between the nodes.

13. The apparatus of claim 10, wherein the network obtaining unit is configured to: combine, in a case where each slave node subordinate to a same master node and another node in the micro-service architecture have a calling logic network, all slave nodes subordinate to the same master node into the corresponding master node based on the calling logic networks and the subordination logic networks, so as to obtain the micro-service logic network.

14. The apparatus of any one of claims 9 to 13, further comprising:
a graph generation unit configured to generate a permission graph of the micro-service architecture based on the micro-service logic network of the micro-service architecture.

15. A micro-service logic network, comprising a plurality of nodes, wherein the nodes comprise nodes in a same level and nodes in different levels in a micro-service architecture; and the nodes are connected through the micro-service logic network, and the micro-service logic network is established according to calling relationships between different nodes in the micro-service architecture and subordination relationships between the nodes, and comprises calling logic networks of the nodes in the same level and calling logic networks of the nodes in the different levels.

16. An electronic device, comprising:
one or more processors;
a memory having stored thereon one or more programs which, when executed by the one or more processors, cause the one or more processors to implement the method of any one of claims 1 to 8; and
one or more input/output (I/O) interfaces connected between the one or more processors and the memory and configured to enable information interaction between the one or more processors and the memory.

17. A computer readable medium having stored thereon a computer program which, when executed by a processor, implements the method of any one of claims 1 to 8.
